# EUROPÄISCHE PATENTANMELDUNG

(11) **EP 3 176 489 A1**
(43) Veröffentlichungstag der Anmeldung: **07.06.2017**
(21) Anmeldenummer: 15198135.4
(22) Anmeldetag: 05.12.2015
(51) Int. Cl.: F16M 11/04

(54) **MOBILE ERSCHÜTTERUNGSFREIE KAMERAAUFHÄNGUNG**

(71) Anmelder: Paulussen, Marco, 41069 Mönchengladbach (DE)
(72) Erfinder: Paulussen, Marco, 41069 Mönchengladbach (DE)
(74) Vertreter: Fabry, Bernd

(57) **Zusammenfassung**

Vorgeschlagen wird eine erschütterungsfreie Kameraaufhängung, die sich dadurch auszeichnet, dass sie einen Schockabsorber mit pneumatischer Luftdruckfeder enthält.

## Beschreibung

### GEBIET DER ERFINDUNG

Die Erfindung befindet sich auf dem Gebiet der Mechanik und betrifft eine Kameraaufhängung zur erschütterungsfreien Aufzeichnung von Bewegungsabläufen, während sich der Kameraträger selbst ebenfalls bewegt.

### STAND DER TECHNIK

Unverzichtbares Element bei allen action-dominierten Filmen sind die rasanten Kamerafahrten, bei denen der Zuschauer sich immer wieder fragt, wie trotz hoher Geschwindigkeiten und Erschütterungen das Bild so ruhig und stabil bleibt, als würden die Aufnahmen mit Standgeschwindigkeit gedreht und dann nur anschließend schneller abgespielt. Handkameras lösen das Problem ansatzweise mit Hilfe einer Software ("fuzzy logic") die Verwackelungen ausgleicht. Im Profibereich greift diese Lösung indes nicht. Das Geheimnis besteht vielmehr in einer hocheffizienten Kameraaufhängung, die es erlaubt, Stöße und Vibrationen zu beinahe einhundert Prozent abzufedern.

Die auf dem Markt befindlichen Produkte setzen hierfür Stoßdämpfer oder metallische Zugfedern oder Kombinationen von beiden ein. Die Ergebnisse sind zwar an sich zufriedenstellend, doch erfordert ein hinreichendes Leistungsvermögen eine große Dimensionierung, so dass die Geräte für den mobilen Einsatz eher ungeeignet sind. Das Modell Vibra-Freak^{®} der Firma DitoGear etwa wird mit Hilfe einer zwei Meter hohen senkrechten sowie einer oder mehrerer Stützstangen mit dem Fahrzeug verbunden und ist dabei bestimmt, Lasten bis etwa 40 kg zu tragen. Werden mechanische Federn eingesetzt, werden zudem 4 Achsen benötigt um das Gewicht einstellen zu können, was den Aufbau zusätzlich kompliziert.

In diesem Zusammenhang sei auf die deutschen Gebrauchsmuster DE 20 2014 001461 U1 (ZEDNICEK) sowie DE 2012 011389 U1 und DE 2014 006764 U1 (KOPPEN-DÖRFER) verwiesen, die ebenfalls vibrationsfreie Kameraaufhängungen zum Gegenstand haben.

Die Aufgabe der vorliegenden Erfindung hat daher darin bestanden, eine mobile Kameraaufhängung zur Verfügung zu stellen, die auch bei hohen Fahrgeschwindigkeiten und den damit verbundenen Stößen und Schwingungen, erschütterungsfreie Bilder liefert und den Produkten des Stands der Technik überlegen ist.

### BESCHREIBUNG DER ERFINDUNG

Der Gegenstand der Erfindung betrifft eine erschütterungsfreie Kameraaufhängung, die sich dadurch auszeichnet, dass sie einen Schockabsorber mit pneumatischer Luftdruckfeder enthält.

Insbesondere umfasst die Erfindung eine Vorrichtung, die die folgenden miteinander verbundenen Bauteile umfasst:
(i) eine Basis (1) zur Befestigung an oder auf einem Träger (2) und
(ii) einen Schockabsorber (3);
wobei
(a) der Schockabsorber (3) an seinem unteren Ende über die Befestigungsvorrichtung (1) mit dem Träger (2) verbunden ist und am oberen Ende eine Aufhängung (5) zur Aufnahme weiterer Bauteile aufweist;
(b) der Schockabsorber (3) als zwei separate, starr zueinander angeordnete Achsen (6a, 6b) ausgebildet ist,
(c) die Achsen (6a, 6b) jeweils vier Stangen (7a-d) aufweisen, die auf der Grundfläche eines Quadrats starr zueinander angeordnet sind und zusammen ein Rechteck aufspannen;
(d) die beiden Achsen (6a, 6b) übereinander angeordnet und in die Befestigungsvorrichtung (1) eingepasst sind, und
(e) die obere (6a) mit der unteren Achse (6b) über mindestens eine pneumatische Luftdruckfeder (8) verbunden ist.

Überraschenderweise wurde gefunden, dass die Luftfederung, die sonst nur im Automobilbau eingesetzt wird, nicht nur in besonderer Weise geeignet ist, Stöße bei bewegter Kamerafahrt abzufedern und auszugleichen, sondern auch zwei Achsen ausreichend sind, um das Gewicht einzustellen und zu stabilisieren. Auf diese Weise lassen sich mobile Geräte bauen, die deutlich leichter als die Produkte des Stands der Technik sind und sich entsprechend leichter anbringen und wieder entfernen lassen.

### BASIS

Die Basis dient dazu, die Kameraaufhängung mit dem Träger, vorzugsweise einem Fahrzeug, sicher zu verbinden. Vorzugsweise handelt es sich dabei um eine Bodenplatte mit zwei senkrecht dazu montierten Seitenteilen, zwischen die die beiden Achsen (6a, 6b) des Schockabsorbers (3) befestigt werden.

Die Bodenplatte kann mit Bohrungen versehen sein, durch die eine Verschraubung mit der Karosserie des Trägerfahrzeugs möglich wird. Da die vorliegende Erfindung es ermöglicht, mobile Einheiten herzustellen, die ein geringes Gewicht besitzen, besteht eine besonders vorteilhafte Ausführungsform der Befestigung darin, dass diese durch Unterdruck erfolgt. Dazu wird die Bodenplatte beispielsweise mit einem flexiblem Kunststoff ("Saugnapf") ausgestattet und ein Vakuum über eine Saugpumpe erzeugt. Ein Regler prüft den Unterdruck während der Fahrt und regelt diesen gegebenenfalls nach, damit sich die Basis nicht während des Betriebs löst. Diese Ausgestaltungsform ist allein deshalb so vorteilhaft, weil damit Beschädigungen, beispielsweise durch Bohrungen, an der Karosserie des Trägerfahrzeugs vermieden werden. Vorzugsweise kommen hier mindestens 4 und insbesondere 6 Saugnäpfe zum Einsatz.

### SCHOCKABSORBER

Der Schockabsorber mit der pneumatischen Luftfeder stellt das zentrale Element der neuen Kameraaufhängung dar. Wie schon eingangs beschrieben, setzt sich der Absorber aus einer oberen und einer unteren Achse (6a, 6b) zusammen, die zueinander starr montiert in die Halterung der Basis eingepasst und befestigt werden. Die beiden Achsen bestehen dabei aus jeweils vier Stangen (7a-d), die jeweils kopf- und endseitig in einer Halterung (9a, 9b) eingebaut sind. Es hat sich als vorteilhaft erwiesen, wenn die Luftdruckfeder am unteren Arm ansetzt und zum oberen Arm führt als umgekehrt; auf diese Weise lassen sich Stöße deutlich besser auffangen; die entgegengesetzte Ausführungsform ist jedoch ebenfalls möglich und erfindungskonform.

Die Aufhängung (5), die weitere Bauteile tragen kann, ist mit dem Schockabsorber (3) über die beiden oberen Halterungen (9a, 9b) der beiden Achsen (6a, 6b) verbunden. Die Verbindung erfolgt über Stellschrauben, so dass eine genaue Positionierung der Aufhängung in einer Ebene möglich ist. Sie ist dabei von ihrer Form beschaffen, dass sie unter dem Gewicht des Ronins nicht einknickt oder abbricht.

Die pneumatische Luftdruckfeder (8) ist zum einen mit der unteren Halterung der oberen Achse (6a) fest verbunden ist. Zugleich ist sie mit der unteren Achse (6b) über einen beweglichen Schieber (10) verbunden, der die Feder an die vier Stangen (7a-d) des Arms anschließt. Dieser Schieber ("Kapodaster") kann von Hand bedient werden und dient dazu, den Ansatzpunkt der Luftdruckfeder an der Achse zu verschieben. Auf diese Weise kann die Last, d.h. das Gewicht einer an der Aufhängung befestigten Last austariert werden.

In besonderen Fällen kann es sinnvoll sein, statt einer Luftdruckfeder mehrere einzusetzen. Bewährt hat sich vor allem der Einsatz von zwei Luftdruckfedern, die parallel zueinander eingebaut werden. Muss die Aufhängung (5) besonders schwere Lasten tragen, empfiehlt es sich, die Luftdruckfeder durch Stoßdämpfer, speziell Öldruckstoßdämpfer, zu unterstützen. Dazu werden ein oder zwei dieser Bauteile parallel zu der oder den Luftdruckfeder(n) montiert.

Die Achsen (6a, 6b) des Schockabsorbers (3) weisen in der Regel eine Länge von etwa 30 bis etwa 70 cm und insbesondere etwa 50 cm auf und spannen insbesondere eine quadratische Grundfläche von etwa 20 x 20 bis etwa 30 x 30 cm auf. Die Stangen (7a-d) besitzen in der Regel einen runden Querschnitt mit einem Durchmesser von etwa 1 bis etwa 2 cm.

Der Schockabsorber kann aus Leichtmetall oder Kunststoff gefertigt werden; vorzugsweise besteht er aus Aluminium. Das Eigengewicht liegt typisch bei etwa 8 bis etwa 20 kg und befähigt zum Tragen von Lasten im Bereich von 15 bis maximal 20 kg.

### LASTEN

Der Erfindungsgegenstand dient dazu Kameras erschütterungsfrei aufzuhängen. Bei der Last, welche an die Aufhängung (5) montiert wird, handelt es sich daher um eine Kamera oder ein Kamerasystem, welches auch als "Ronin" bezeichnet wird. Unter dieser Bezeichnung versteht der Fachmann eine Kardanaufhängung, die in drei Achsen im Sinne eines Vibrationsabsorbers stabilisiert ist und eine Kamera integriert enthält. Das Ronin wird über Fernsteuerung bedient. Entsprechende Bauteile sind im Handel beispielsweise von der Firma "dji" erhältlich.

Zwischen Kamera bzw. Ronin kann zusätzlich auch noch ein Stabilisator montiert werden, der hochfrequente Schwingungen ausgleicht. Vorzugsweise handelt es sich bei der Last, die mit der Aufhängung verbunden ist, um eine Stange, die vertikal zu der Ebene angebracht ist, die die erfindungsgemäße Vorrichtung aufspannt. An die Stange können dann weitere Vorrichtungen, nämlich insbesondere eine Kamera bzw. ein Ronin befestigt werden, so dass eine stufenlose Höhenverstellung möglich ist.

### GEWERBLICHE ANWENDBARKEIT

Ein weiterer Aspekt der vorliegenden Erfindung betrifft Verwendung einer pneumatischen Luftdruckfeder zur Schockabsorption in einer erschütterungsfreien Kameraaufhängung.

### KURZE BESCHREIBUNG DER ABBILDUNGEN

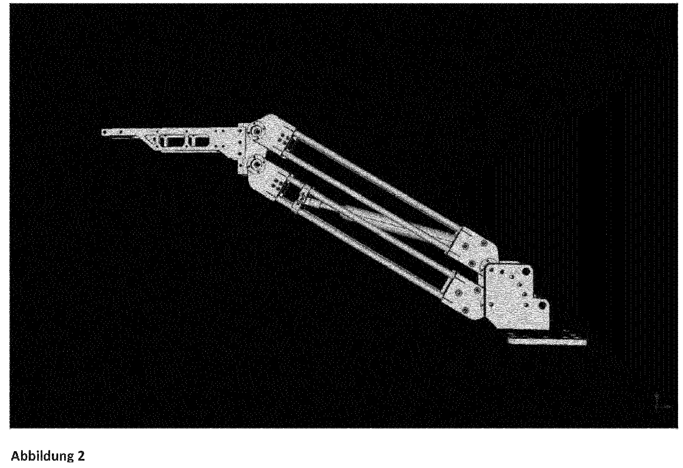

Die vorliegende Erfindung wird durch die nachfolgenden Abbildungen illustriert ohne sie auf diese speziellen Ausführungsformen zu beschränken.

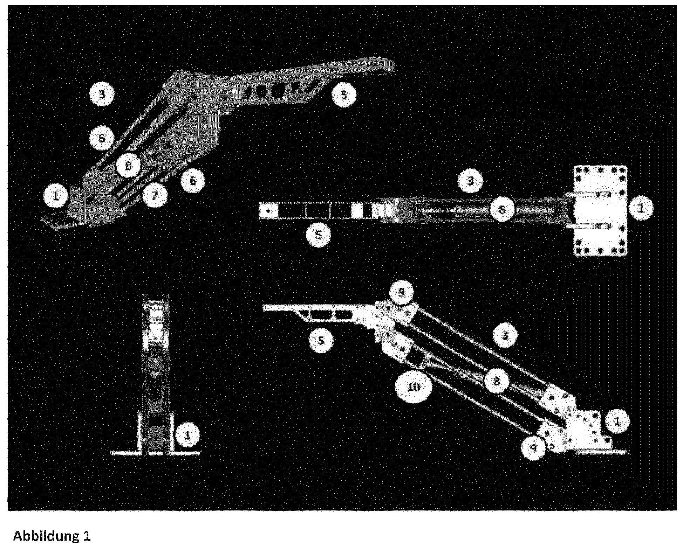

- Abbildung 1:: Übersicht mit Bezugszeichen, nämlich
- 1: Basis
- 2: Träger (nicht im Bild)
- 3: Schockabsorber
- 4: Last, z.B. ein Ronin (nicht im Bild)
- 5: Aufhängung für die Last
- 6a, 6b: Achsen des Schockabsorbers
- 7a-d: Gestänge
- 8: Pneumatische Luftdruckfeder
- 9: Halterungen für das Gestänge der beiden Achsen
- Abbildung 2:: Seitenansicht der Vorrichtung.

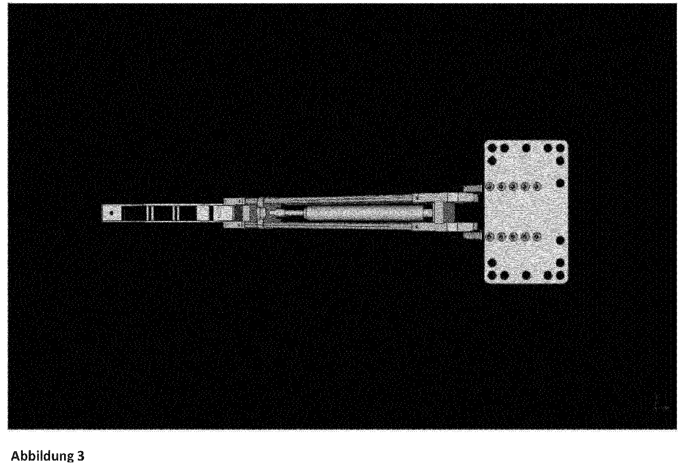

- Abbildung 3:: Sicht von unten auf die Vorrichtung.

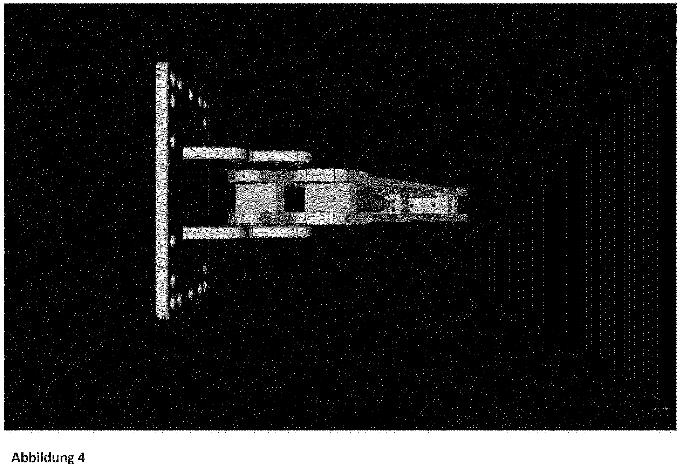

- Abbildung 4:: Hinteransicht

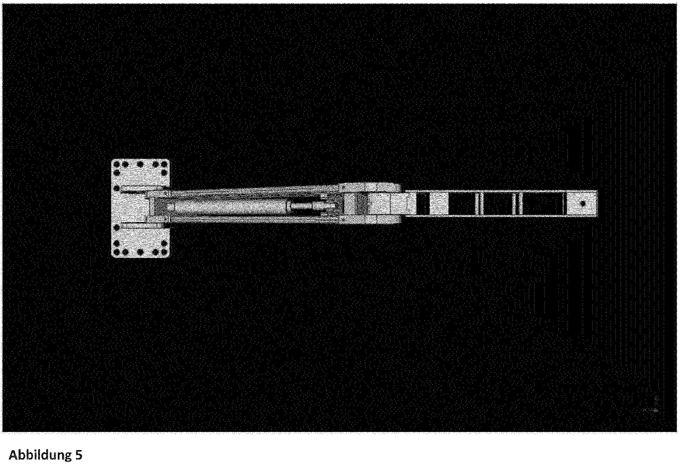

- Abbildung 5:: Aufsicht

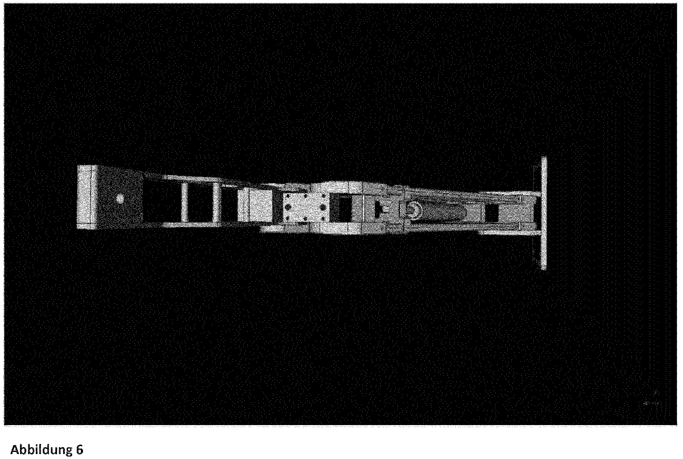

- Abbildung 6:: Aufsicht

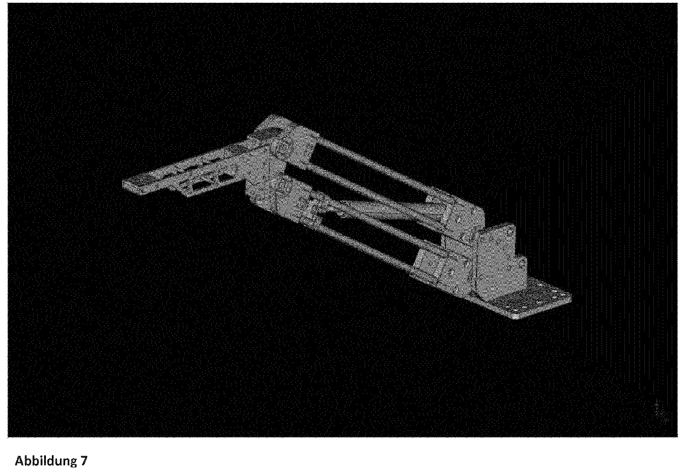

- Abbildung 7:: Schrägsicht von rechts

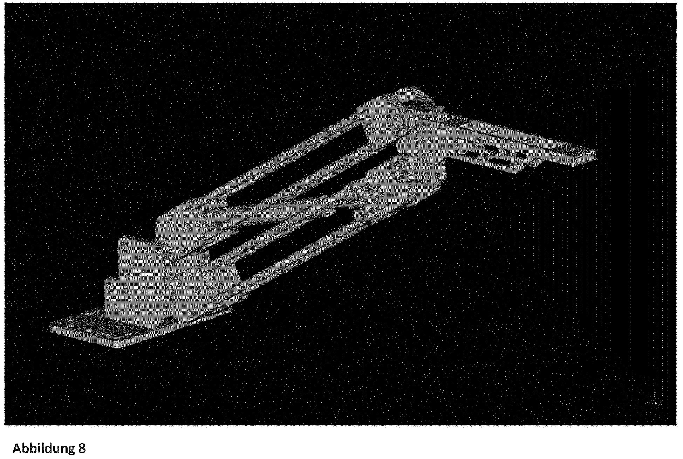

- Abbildung 8:: Schrägsicht von links

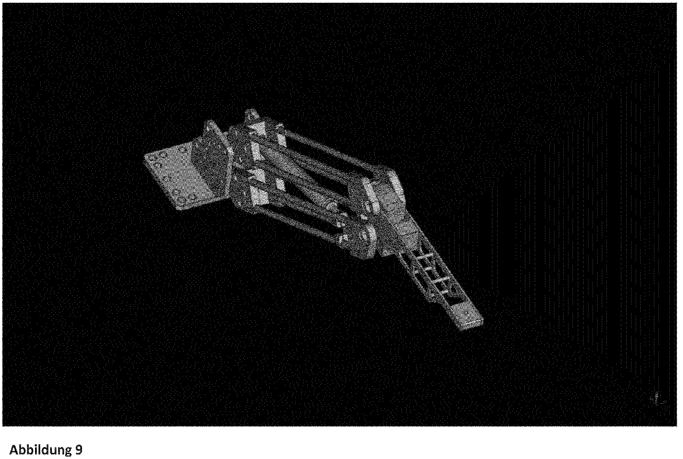

- Abbildung 9:: Schrägsicht von oben

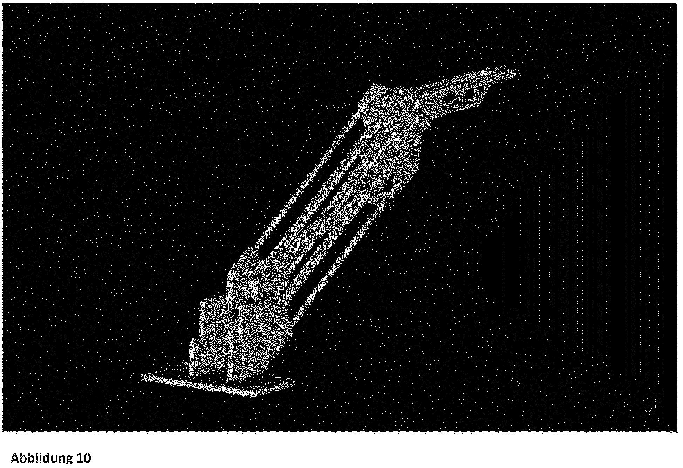

- Abbildung 10:: Schrägsicht von hinten

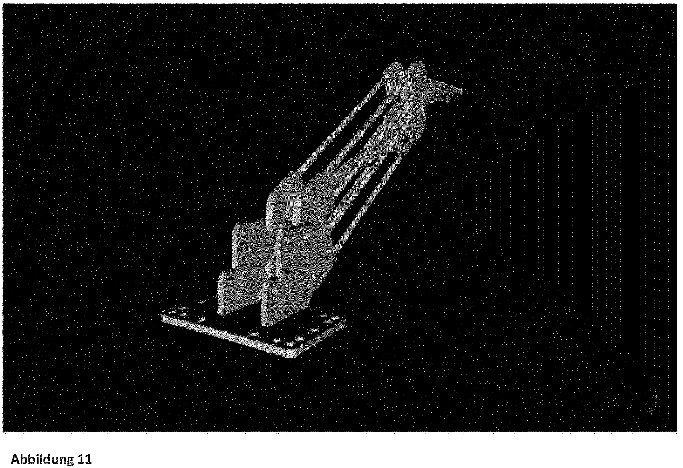

- Abbildung 11:: Schrägsicht von hinten

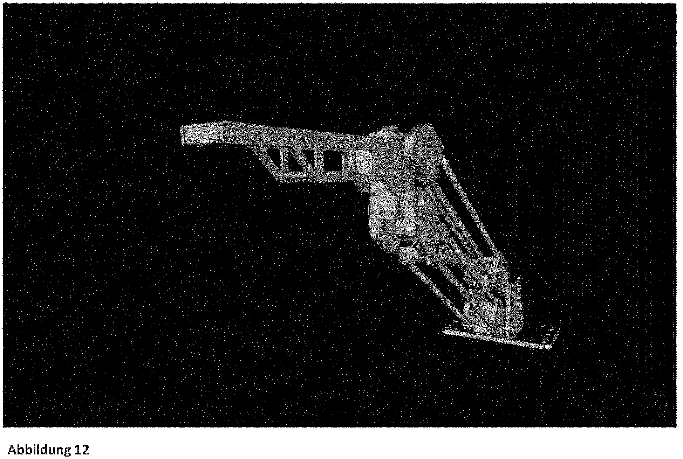

- Abbildung 12:: Schrägsicht von vorne

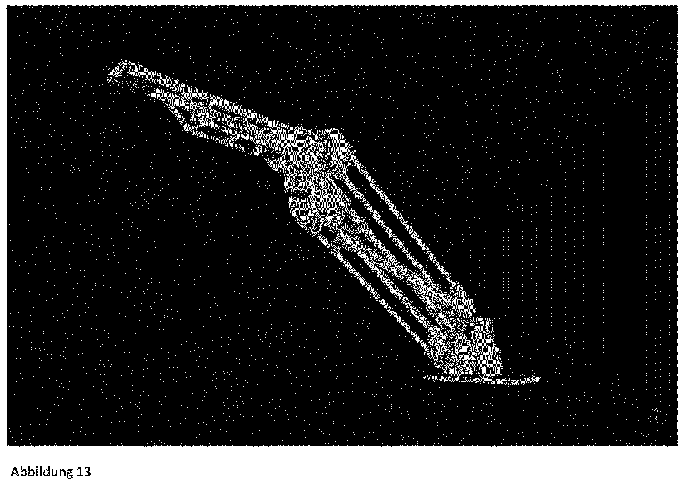

- Abbildung 13:: Schrägsicht von unten

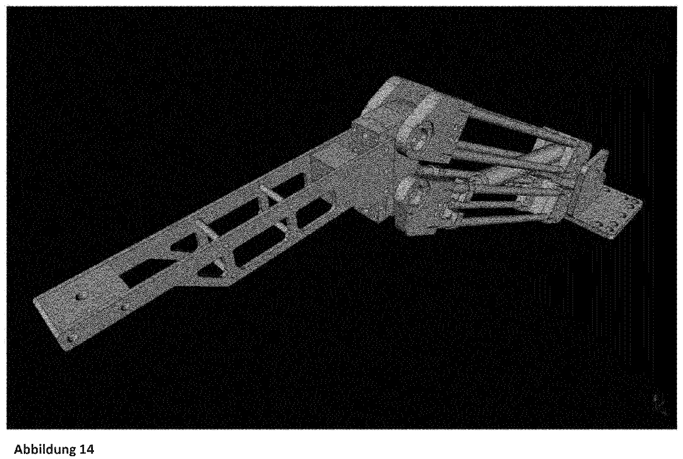

- Abbildung 14:: Schrägsicht von oben

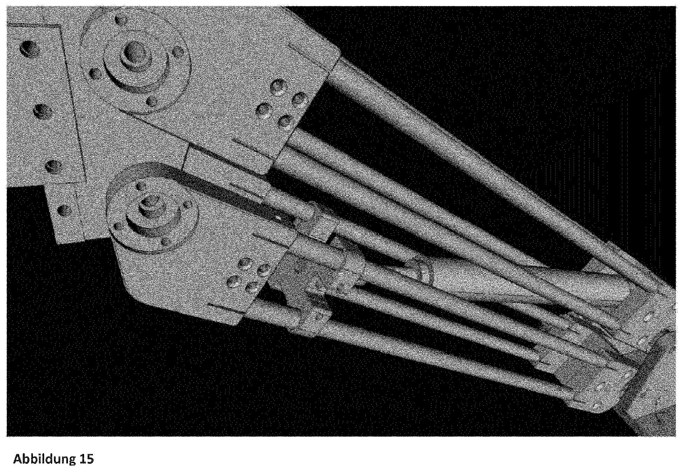

- Abbildung 15:: Detail Schockabsorber

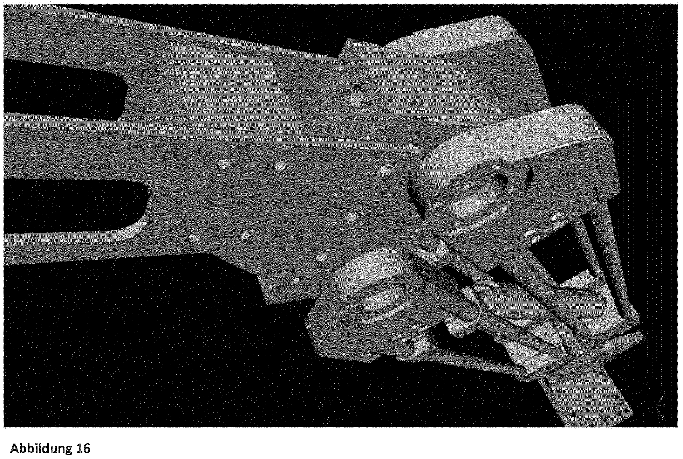

- Abbildung 16:: Detail Schockabsorber

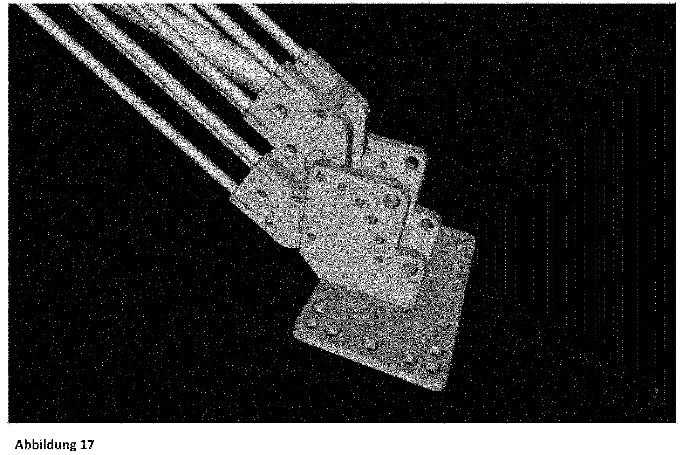

- Abbildung 17:: Detail Schockabsorber

## Patentansprüche

1. Erschütterungsfreie Kameraaufhängung, die sich dadurch auszeichnet, dass sie einen Schockabsorber mit pneumatischer Luftdruckfeder enthält.

2. Vorrichtung nach Anspruch 1, **dadurch gekennzeichnet, dass** sie die folgenden miteinander verbundenen Bauteile enthält:
(i) eine Basis (1) zur Befestigung an oder auf einem Träger (2) und einen
(ii) einen Schockabsorber (3);
wobei
(a) der Schockabsorber (3) an seinem unteren Ende über die Befestigungsvorrichtung (1) mit dem Träger (2) verbunden ist und am oberen Ende eine Aufhängung (5) für weitere Bauteile aufweist;
(b) der Schockabsorber (3) als zwei separate, starr zueinander angeordnete Achsen (6a, 6b) ausgebildet ist,
(c) die Achsen (6a, 6b) jeweils vier Stangen (7a-d) darstellen, die auf der Grundfläche eines Quadrats starr zueinander angeordnet sind und zusammen ein Rechteck aufspannen;
(d) die beiden Achsen (6a, 6b) übereinander angeordnet und in die Befestigungsvorrichtung (1) eingepasst sind, und
(e) die obere (6a) mit der unteren Achse (6b) über mindestens eine pneumatische Luftdruckfeder (8) verbunden ist.

3. Vorrichtung nach den Ansprüchen 1 und/oder 2, **dadurch gekennzeichnet, dass** die Basis aus einer Bodenplatte und zwei senkrecht dazu montierten Seitenteilen besteht, zwischen die die beiden Achsen (6a, 6b) des Schockabsorbers (3) befestigt werden.

4. Vorrichtung nach mindestens einem der Ansprüche 1 bis 3, **dadurch gekennzeichnet, dass** die Basis (1) mit dem Träger (2) durch Verschrauben oder Unterdruck verbunden ist.

5. Vorrichtung nach mindestens einem der Ansprüche 1 bis 4, **dadurch gekennzeichnet, dass** die jeweils vier Stangen (7a-d) der beiden Achsen (6a, 6b) des Schockabsorbers (3) jeweils kopf- und endseitig in einer Halterung (9a, 9b) eingebaut sind.

6. Vorrichtung nach mindestens einem der Ansprüche 1 bis5, **dadurch gekennzeichnet, dass** die Aufhängung (5) mit dem Schockabsorber (3) über die oberen Halterungen (9a, 9b) der beiden Achsen (6a, 6b) verbunden ist.

7. Vorrichtung nach mindestens einem der Ansprüche 1 bis 6, **dadurch gekennzeichnet, dass** die pneumatische Luftdruckfeder (8) mit der oberen Halterung des unteren Arms (6a) oder umgekehrt fest verbunden ist.

8. Vorrichtung nach mindestens einem der Ansprüche 1 bis 7, **dadurch gekennzeichnet, dass** die pneumatische Luftfeder (8) mit dem unteren Arm über einen beweglichen Schieber (10) verbunden ist, der die Feder an die vier Stangen (7a-d) des Arms anschließt.

9. Vorrichtung nach mindestens einem der Ansprüche 1 bis 8, **dadurch gekennzeichnet, dass** die Achsen (6a. 6b) des Schockabsorbers (3) eine Länge von etwa 30 bis etwa 70 cm aufweisen.

10. Vorrichtung nach mindestens einem der Ansprüche 1 bis 9, **dadurch gekennzeichnet, dass** die Achsen (6a, 6b) des Schockabsorbers eine quadratische Grundfläche von etwa 20 x 20 bis etwa 30 x 30 cm aufspannen.

11. Vorrichtung nach mindestens einem der Ansprüche 1 bis 10, **dadurch gekennzeichnet, dass** die Stangen (7a-d) einen Durchmesser von etwa 1 bis etwa 2 cm aufweisen.

12. Vorrichtung nach mindestens einem der Ansprüche 1 bis 11, **dadurch gekennzeichnet, dass** die Aufhängung (5) als weiteres Bauteil eine Stange aufweist, die vertikal zur Ebene ausgerichtet ist, die die Vorrichtung aufspannt.

13. Vorrichtung nach mindestens einem der Ansprüche 1 bis 12, **dadurch gekennzeichnet, dass** die Vorrichtung aus Leichtmetall oder Kunststoff besteht.

14. Vorrichtung nach mindestens einem der Ansprüche 1 bis 13, **dadurch gekennzeichnet, dass** die Vorrichtung ein Gewicht im Bereich von etwa 8 bis etwa 20 kg aufweist.

15. Verwendung einer pneumatischen Luftdruckfeder zur Schockabsorption in einer erschütterungsfreien Kameraaufhängung.
